# EUROPÄISCHE PATENTSCHRIFT

(11) **EP 1 254 358 B1**
(45) Veröffentlichungstag und Bekanntmachung des Hinweises auf die Patenterteilung: **17.05.2017**
(21) Anmeldenummer: 01987875.0
(22) Anmeldetag: 19.10.2001
(51) Int. Cl.: G01L 19/00, G01L 19/14, G01L 19/06

(54) **DRUCKSENSORMODUL**
PRESSURE SENSOR MODULE
MODULE CAPTEUR DE PRESSION

(30) Priorität: 20.10.2000 DE 10052406
(43) Veröffentlichungstag der Anmeldung: 06.11.2002
(73) Patentinhaber: ROBERT BOSCH GMBH, 70442 Stuttgart (DE)
(72) Erfinder: WOERSINGER, Juergen, 75433 Maulbronn (DE); MAST, Martin, 70839 Gerlingen (DE)
(86) Internationale Anmeldenummer: PCT/DE2001/003990
(87) Internationale Veröffentlichungsnummer: WO 2002/033375

(56) Entgegenhaltungen:
- US-A- 5 621 176
- PATENT ABSTRACTS OF JAPAN vol. 009, no. 206 (M-406), 23. August 1985 (1985-08-23) & JP 60 065974 A (MATSUSHITA DENKI SANGYO KK), 15. April 1985 (1985-04-15)

## Beschreibung

### Stand der Technik

Bei fortschrittlichen Motorsteuerungen wird der Kraftstoffdruck zur Verminderung der Kraftstoffaufheizung und zur Vermeidung der Emission von Kraftstoffen geregelt. Dabei wird mit Hilfe eines Kraftstoffdrucksensors die Differenz zwischen Kraftstoff- und Saugrohrdruck gemessen. Als kostengünstige Kraftstoffdrucksensoren werden derzeit mikromechanische Sensoren auf Siliziumbasis verwendet. Dabei wird eine einer Schaltung abgewandte Membranseite mit Kraftstoff beaufschlagt und eine der Schaltung zugewandte Membranseite ist mit dem Saugrohr verbunden. Wenn durch Fertigungs- oder Handhabungsfehler die Membran des Sensors bricht, wird der Kraftstoff durch die geborstene Membran direkt ins Saugrohr gepumpt und kann durch Kraftstoffschlag zur Zerstörung des Motors führen.

Bekannt sind Differenzdrucksensoren, die auf einer Druckseite zusätzlich eine Metallmembran aufweisen, auf die der Druck ausgeübt wird und die diesen über ein Silikonöl an die Membran des Sensors überträgt. Wenn die Membran des Sensors infolge einer Überbeanspruchung bricht, legt sich die Metallmembran an eine vorgesehene Stützfläche an und nimmt den Druck auf, so dass das Medium auf der Druckseite nicht ins Sensorgehäuse und/oder in den Bereich der anderen Druckseite gelangen kann. Lediglich eine geringe Menge des vorhandenen Silikonöls gelangt in das Saugrohr.

Diese Sensoren sind jedoch infolge des aufwendigen Aufbaus für die Metallmembran und die Ausbildung des hermetisch dichten Volumens für das Silikonöl teurer. Dies ist bedingt durch die Stoff- und Prozesskosten für die Verbindungstechnik, die Ölbefüllung und Abgleich nach der Ölbefüllung. Für die Einhaltung der Genauigkeitsanforderungen ist eine Mindestgrösse der Metallmembran und damit auch eine entsprechende Baugrösse erforderlich, welches einer Miniaturisierung entgegensteht.

Aus der GB 2264070 A1 ist eine Vorrichtung mit einem Differenzdrucksensor und einem Ventil bekannt, das eine Zuleitung zum Differenzdrucksensor schliessen kann. Dies kann nur über eine elektronische Steuerung erfolgen. Das Dokument US5621176 offenbart ein Drucksensormodul zur Messung eines Differenzdrucks, zumindest bestehend aus einem Sensorchip zur Messung eines Differenzdrucks und ein Modulgehäuse, das zwei Zuleitungen aufweist, die durch den Sensorchip voneinander getrennt sind und in denen zumindest Zeitweise verschiedene Drücke vorhanden sind, wobei in zumindest einer Zuleitung ist ein Ventil angeordnet, das diese Zuleitung verschließt, wenn der Sensorchip die Zuleitungen nicht mehr voneinander trennt, wobei das Ventil aus zumindest zwei Verengungen der einen Zuleitung und einem Ventilkörper, der in dieser Zuleitung zwischen zwei der zumindest zwei Verengungen dieses Ventil umfasst einen beweglichen Ventilkörper. Vorteile der Erfindung

Die Erfindung geht aus von einem Drucksensormodul nach der Gattung des Anspruchs 1. Das erfindungsgemässe Drucksensormodul hat demgegenüber den Vorteil, dass auf einfache Art und Weise ein Übergang eines Mediums von einer Zuleitung in eine andere Zuleitung verhindert wird, wobei dies unabhängig vom Druck, bzw. unabhängig von der Strömung des Mediums erfolgt.

Durch die in den abhängigen Ansprüchen aufgeführten Massnahmen sind vorteilhafte Weiterbildungen und Verbesserungen des im Anspruch 1 genannten Drucksensormoduls möglich.

Eine vorteilhafte Ausgestaltung eines Ventils ergibt sich dadurch, dass ein Auftriebskörper zwischen zwei Verengungen einer Zuleitung angeordnet ist, und diese durch Anliegen an einer Verengung verschliesst, wenn ein Sensorchip die Zuleitungen nicht mehr voneinander trennt.

Eine Verengung kann auf vorteilhafte Weise durch ein Lochgitter gebildet sein.

Als Auftriebskörper wird vorteilhafterweise eine Kugel verwendet, die einen kleineren Querschnitt als die Zuleitung hat.

Eine vorteilhafte Ausbildung der Erfindung ist im Patentanspruch 6 aufgelistet, bei der das Drucksensormodul an einem Saugrohr einer Verbrennungskraftmaschine und an eine Brennstoffleitung angeschlossen ist.

Es ist vorteilhaft, wenn das Drucksensormodul vertikal eingebaut ist, weil dadurch der Auftriebskörper die Zuleitung nicht in ungewollter Weise verschliesst.

Es ist vorteilhaft, wenn der Auftriebskörper eine geringere Dichte als der Brennstoff aufweist, weil der Auftriebskörper aufgrund des Auftriebs im Brennstoff sich an die zweite Verengung anlegt und dadurch die Leitung verschliesst, so dass kein Brennstoff in das Saugrohr gelangen kann.

Es ist vorteilhaft, wenn die Verengung oder der Auftriebskörper zusätzlich Dichtelemente aufweisen, die ein Abdichten erleichtern.

Zur Führung des Auftriebskörper weist die Zuleitung auf vorteilhafte Weise Führungsschienen auf, die gewährleisten, dass der Auftriebskörper immer optimal an der Verengung zum Anliegen kommt und dass im Normalbetrieb genügend Raum zum Mediumaustausch bei Saugrohrdruckänderungen vorhanden ist.

### Zeichnung

Ausführungsbeispiele der Erfindung sind in der Zeichnung vereinfacht dargestellt und in der nachfolgenden Beschreibung näher erläutert.
Es zeigen
Figur 1 ein erfindungsgemässes Drucksensormodul,
Figur 2a, b einen Ausschnitt weiterer erfindungsgemässer Drucksensormodule, Figur 2c einen Schnitt entlang der Linie A-A in Figur 2b, und Figur 2d ein weiteres Ausführungsbeispiel für einen Auftriebskörper,
Figur 3 eine Sensorzelle, die in einem erfindungsgemässen Drucksensormodul eingebaut ist.

### Beschreibung der Ausführungsbeispiele

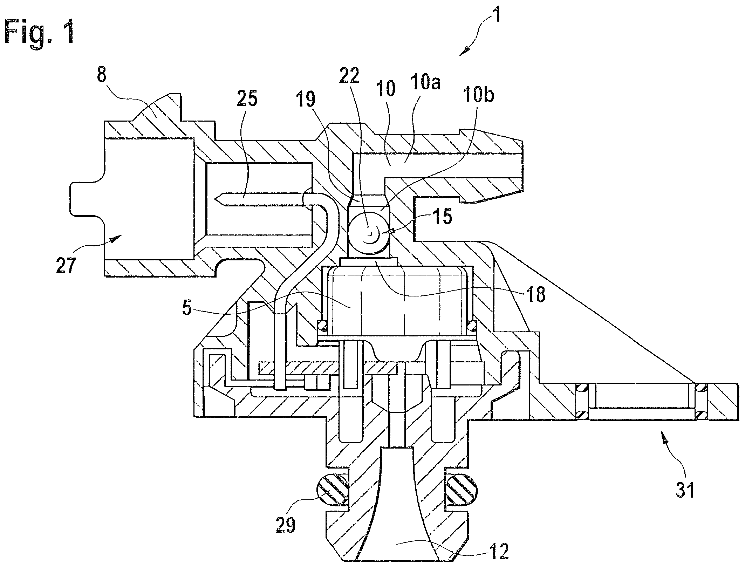

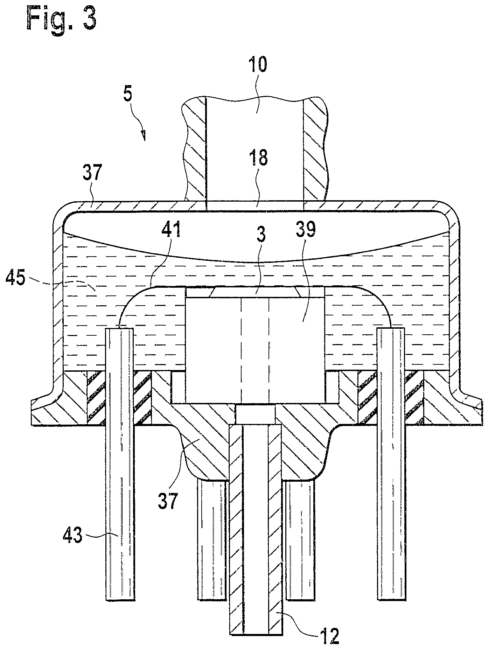

Figur 1 zeigt ein erfindungsgemässes Drucksensormodul 1, das unter anderem aus einem Modulgehäuse 8 besteht, in dem zumindest teilweise eine Sensorzelle 5 angeordnet ist. Die Sensorzelle 5 enthält bspw. einen Sensorchip 3 (Fig. 3), der einen Druck bzw. eine Druckdifferenz messen kann. Üblicherweise ist dies ein mikromechanischer Sensor auf Siliziumbasis, der eine Membran aufweist.
An die Sensorzelle 5 sind eine erste Zuleitung 10, die beispielsweise mit einem Saugrohr einer Brennkraftmaschine verbunden ist, und eine zweite Zuleitung 12, die beispielsweise mit einer Brennstoffleitung verbunden ist, angeschlossen.
Der Sensorchip 3 mit seiner Membran trennt die erste Zuleitung 10 und die zweite Zuleitung 12 voneinander, so dass kein Medium aus der einen Zuleitung 10, 12 in die andere Zuleitung 12, 10 gelangt.
Bspw. in der ersten Zuleitung 10, in einem Teilbereich 10b ist ein Ventil 15 angeordnet, das die erste Zuleitung 10 verschliesst, wenn die Membran bricht und so die erste Zuleitung 10 und die zweite Zuleitung 12 voneinander trennt, so dass das Medium aus der zweiten Zuleitung 12 nicht in die erste Zuleitung 10 gelangen kann.

Das Ventil 15 ist beispielsweise ein Teilbereich 10b der ersten Zuleitung 10, die eine erste Verengung 18 und eine zweite Verengung 19 aufweist. Der restliche Teil der Zuleitung 10 wird mit 10a gekennzeichnet.
Zwischen den zwei Verengungen 18, 19 ist ein Auftriebskörper 22 angeordnet, der das bewegliche Ventilglied des Ventils 15 bildet.

Wenn die Membran die erste Zuleitung 10 und die zweite Zuleitung 12 voneinander trennt, liegt der Auftriebskörper 22 aufgrund seines Gewichts an oder auf der zweiten Verengung 18 auf, wobei er die erste Zuleitung 10 nicht verschliesst. D.h. ein Druck in der ersten Zuleitung 10 wirkt auf der einen Membranseite und ein Druck aus der zweiten Zuleitung 12 wirkt auf die andere Membranseite, so dass ein Differenzdruck gemessen wird.
Die erste Verengung 18 ist beispielsweise ein Lochgitter. Die zweite Verengung 19 wird beispielsweise dadurch gebildet, dass sich ein Querschnitt der ersten Zuleitung 10b verringert. Der Auftriebskörper 22 ist beispielsweise eine Kugel, ein Zylinder oder eine andere Form, die durch Anlage an die einen Ventilsitz bildende zweite Verengung 19 die Zuleitung 10 verschliessen können, und die einen geringeren Querschnitt als die bspw. runde Zuleitung 10b zwischen den zwei Verengungen 18, 19 haben.

Wenn die Membran die erste Zuleitung 10 und die zweite Zuleitung 12 nicht mehr voneinander trennt, bewirkt der bspw. höhere Druck in der zweiten Zuleitung 12, dass der Auftriebskörper 22 durch den höheren Druck in der zweiten Zuleitung 12 und das strömende Medium an die zweite Verengung 19 gedrückt wird und so die erste Zuleitung 10 verschliesst, so dass die erste Zuleitung 10 und die zweite Zuleitung 12 wieder voneinander getrennt sind.
Wenn das Medium in der zweiten Zuleitung 12 ein flüssiges Medium wie z.B. ein flüssiger Brennstoff ist und dieses bei zerborstener Membran durch die erste Verengung 18 in die Zuleitung 10b gelangt, erfährt der Auftriebskörper einen Auftrieb, da der Auftriebskörper 22 vorteilhafter Weise eine geringere Dichte als der flüssige Brennstoff aufweist. Der Auftriebskörper 22 wird durch den Auftrieb und durch den höheren Druck in der Zuleitung 12 an die zweite Verengung 19 angedrückt.
Die Steuerung des Ventils 15 erfolgt also ohne zusätzliche Hilfsmittel, da das Medium in der einen Zuleitung 12 bzw. der Druckunterschied in den Zuleitungen 10,12 eine Schliessung des Ventils 15 bewirken.

Das Drucksensormodul 1 weist weiterhin elektrische Anschlusselemente 25 auf, die Teil eines Steckers 27 sind, der zu einem elektrischen Anschluss an eine äussere elektrische Energiequelle und/oder Steuerungseinheit dient. Bspw. zumindest eine Zuleitung 10, 12 weist an ihrem äusseren Umfang beispielsweise einen Dichtring 29 auf, der beim Einführen des Drucksensormoduls 1 in ein weiteres Bauteil zur Abdichtung dient.
Das Drucksensormodul 1 weist weiterhin ein Befestigunsflansch 31 auf, der zur Befestigung des Drucksensormoduls 1 an das Bauteil dient.

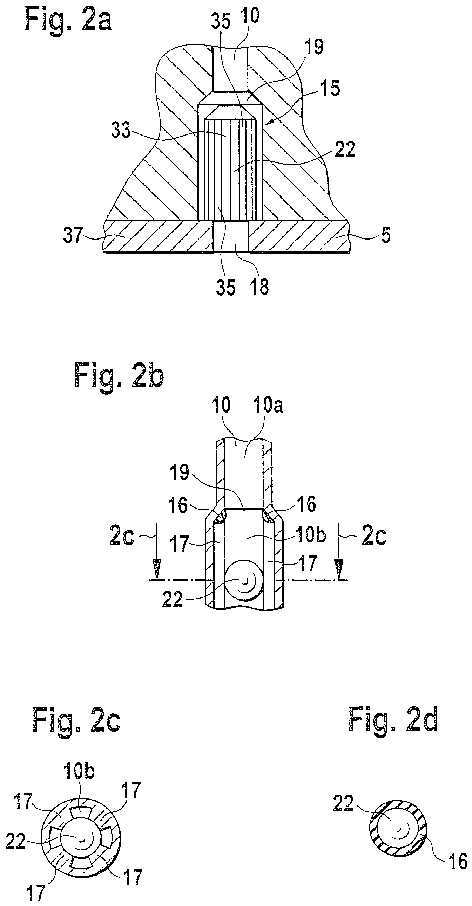

Figur 2a zeigt einen Ausschnitt aus Figur 1 für ein weiteres Ausführungsbeispiel der Erfindung.
Es zeigt im wesentlichen eine weitere Ausführung des Ventils 15.
Die erste Verengung 18 wird beispielsweise durch eine Öffnung im Gehäuse 37 (Fig. 3) der Sensorzelle 5 gebildet, die einen kleineren Querschnitt als der Auftriebskörper 22 hat.
Die zweite Verengung 19 ist wie in Figur 1 durch eine Verringerung des Querschnitts der ersten Zuleitung 10b ausgebildet.
Der Auftriebskörper 22 wird durch ein Element 33 gebildet, das durchgehende Längsnuten 35 aufweist. Durch die Längsnuten 35 wird gewährleistet, dass eine Verbindung von der ersten Zuleitung 10 zur Sensorzelle 5 gegeben ist, auch wenn eine umhüllende Mantelfläche des Elements 33 identisch mit dem Querschnitt der ersten Zuleitung 10b zwischen den zwei Verengungen 18, 19 ist.
Beispielsweise hat die Zuleitung 10b in diesem Bereich einen runden Querschnitt und der Auftriebskörper 22 wird durch einen Zylinder gebildet, der die entsprechenden durchgehenden Längsnuten 35 aufweist. Der Zylinder 33 liegt teilweise direkt an der Zuleitung 10b an, wobei aber durch die Längsnuten 35 ein Durchgang von der ersten Zuleitung 10 zur Sensorzelle 5 gewährleistet ist. Auch der Zylinder 33 verschliesst die Zuleitung 10, wie schon bei Figur 1 erläutert, wenn die Membran geborsten ist und eine der Verengung 19 zugewandte Stirnseite des Zylinders 33 der Verengung 19 angepasst ist, bspw. sind die Stirnseite und die Verengung 19 konisch ausgebildet.

Figur 2b zeigt eine Kugel als Auftriebskörper 22, die durch Führungsschienen 17 geführt ist. Auch ein Zylinder oder eine andere Form können durch die Führungsschienen geführt sein. Die Führungsschienen 17 gewährleisten, dass die Kugel immer optimal zum Anliegen an die Verengung 19 kommt, weil der Durchmesser eines Kreises, der durch die freien Ende der Führungsschienen 17 gebildet wird, ungefähr dem Aussendurchmesser der Kugel entspricht.
Um das Abdichten zwischen Verengung 19 und Auftriebskörper 22 zu erleichtern, ist im Bereich der Verengung 19 zumindest ein Dichtelement 16 angebracht, bspw. ein umlaufender Gummiwulst. Die Dichtelemente 16 sind elastisch verformbar, so dass sich eine grosse Dichtfläche ergibt.

Das Dichtelement 16 kann auch auf dem Auftriebskörper 22 vorhanden sein. Figur 2d zeigt eine Kugel als Auftriebskörper 22, die von einem Dichtelement 16 umhüllt ist.

Figur 2c zeigt einen Schnitt entlang der Linie A-A der Figur 2b. Durch den Raum zwischen den Führungsschienen 17, die bspw. im Querschnitt eine Dreiecksform oder eine Stäbchenform aufweisen, wird der Teil der Zuleitung 10 gebildet, durch den der Druck aus der Zuleitung 10 auf die Membran des Sensorchips 3 wirken kann.

Figur 3 zeigt eine Sensorzelle 5, wie sie beispielsweise in dem erfindungsgemässen Drucksensormodul 1 eingesetzt ist. Die Sensorzelle 5 hat ein Sensorgehäuse 37, in dem der Sensorchip 3 auf einem Glassockel 39 angeordnet ist. Der Sensorchip 3 ist innerhalb des Sensorgehäuses 37, beispielsweise durch ein Gel 45, geschützt. Der Sensorchip 3 ist mit Bonddrähten 41 mit elektrischen Sensoranschlusselementen 43 verbunden, die wiederum mit den elektrischen Anschlusselementen 25 verbunden sind.
Das Gehäuse 37 weist eine Öffnung auf, die im Bereich der ersten Verengung 18 angeordnet ist oder diese sogar bildet (Fig. 2) und die an die Zuleitung 10 angeschlossen ist.
Die andere Seite des Sensorchips 3 ist mit der Zuleitung 12 verbunden, wie es gestrichelt gezeichnet angedeutet ist.

## Patentansprüche

1. Drucksensormodul zur Messung eines Differenzdrucks, zumindest bestehend aus
einem Sensorchip (3) zur Messung eines Differenzdrucks, und einem Modulgehäuse, das zumindest zwei Zuleitungen (10,12) aufweist, die durch den Sensorchip voneinander getrennt sind und in denen zumindest zeitweise verschiedene Drücke vorhanden sind, wobei eine der zwei Zuleitungen (10,12) zum Leiten eines flüssigen Brennstoffs adaptiert wird, wobei in zumindest einer Zuleitung (10,12) ein Ventil (15) angeordnet ist, das diese Zuleitung (10,12) verschließt, wenn der Sensorchip (3) die Zuleitungen (10,12) nicht mehr voneinander trennt, wobei
das Ventil (15) aus zumindest zwei Verengungen (18,19) der einen Zuleitung (10,12) und einem Ventilkörper gebildet ist, der in dieser Zuleitung (10,12) zwischen den zwei Verengungen (18,19) beweglich angeordnet ist,
der auf einer ersten Verengung (18) aufliegt, der durch seinen Querschnitt die Zuleitung (10) nicht verschließt, und der die Zuleitung (10) dadurch verschließt, dass er an der zweiten Verengung (19) anliegt, wenn der Sensorchip (3) die Zuleitungen (10,12) nicht mehr voneinander trennt,
**dadurch gekennzeichnet, dass** der Ventilkörper als Auftriebskörper (22) ausgebildet ist, der eine geringere Dichte als flüssiger Brennstoff aufweist.

2. Drucksensormodul nach Anspruch 1,
**dadurch gekennzeichnet, dass**
die erste Verengung (18) durch ein Lochgitter gebildet ist.

3. Drucksensormodul nach Anspruch 1,
**dadurch gekennzeichnet, dass**
der Auftriebskörper (22) eine Kugel ist, die einen kleineren Querschnitt als die Zuleitung (10,12) hat.

4. Drucksensormodul nach Anspruch 1 oder 3,
**dadurch gekennzeichnet, dass**
der Auftriebskörper (22) durch ein Element (33) mit Längsnuten (35) gebildet ist.

5. Drucksensormodul nach Anspruch 1,
**dadurch gekennzeichnet,**
**dass** das Drucksensormodul (1) eine erste Zuleitung (10) und eine zweite Zuleitung (12) hat,
**dass** die erste Zuleitung (10) an ein Saugrohr einer Verbrennungskraftmaschine angeschlossen ist,
**dass** die zweite Zuleitung (12) an eine Brennstoffleitung angeschlossen ist, und dass das Ventil (15) in der ersten Zuleitung (10) angeordnet ist.

6. Drucksensormodul nach Anspruch 1,
**dadurch gekennzeichnet, dass**
eine Längsachse des zumindest einen Teils der Zuleitung (10,12), in dem der Auftriebskörper (22) angeordnet ist, ungefähr vertikal verläuft.

7. Drucksensormodul nach Anspruch 1 oder 5,
**dadurch gekennzeichnet,**
**dass** zwei Zuleitungen (10,12) vorgesehen sind, und
**dass** in einer Zuleitung (10,12) zumindest zeitweise ein Druck herrscht, der grösser oder gleich dem Druck in der anderen Zuleitung (12,10) ist.

8. Drucksensormodul nach Anspruch 1 oder 5,
**dadurch gekennzeichnet, dass**
die Zuleitung (10,12) zwischen zwei Verengungen (18,19) zumindest teilweise Führungsschienen (17) aufweist.

9. Drucksensormodul nach einem oder mehreren der Ansprüche 1, 2, 4oder 6, **dadurch gekennzeichnet, dass**
der Auftriebskörper (22) zumindest ein Dichtelement (16) aufweist.

10. Drucksensormodul nach Anspruch 1,
**dadurch gekennzeichnet, dass**
im Bereich der Verengung (18,19), an die der Auftriebskörper die Zuleitung (10,12) abdichtet, zumindest ein Dichtelement (16) vorhanden ist.

10. Drucksensormodul nach Anspruch 2 oder 6,
**dadurch gekennzeichnet, dass**
die Zuleitung (10,12) zwischen zwei Verengungen (18,19) zumindest teilweise Führungsschienen (17) aufweist.

11. Drucksensormodul nach einem oder mehreren der Ansprüche 2, 4, 5, 7, oder 8, **dadurch gekennzeichnet, dass**
der Auftriebskörper (22) zumindest ein Dichtelement (16) aufweist.

12. Drucksensormodul nach Anspruch 2,
**dadurch gekennzeichnet, dass**
im Bereich der Verengung (18,19), an die der Auftriebskörper die Zuleitung (10,12) abdichtet, zumindest ein Dichtelement (16) vorhanden ist.

## Claims

1. Pressure sensor module for measuring a differential pressure, consisting of at least a sensor chip (3) for measuring a differential pressure, and a module housing which has at least two supply lines (10, 12) which are separated from one another by the sensor chip and in which different pressures are at least occasionally present, wherein one of the two supply lines (10, 12) is adapted for conducting a liquid fuel, wherein a valve (15) is arranged in at least one supply line (10, 12), which valve closes this supply line (10, 12) when the sensor chip (3) no longer separates the supply lines (10, 12) from one another, wherein the valve (15) is formed by at least two narrowings (18, 19) of one supply line (10, 12), and a valve body which is arranged movably in this supply line (10, 12) between the two narrowings (18, 19), lies on a first narrowing (18), on account of its cross section does not close the supply line (10), and closes the supply line (10) by resting against the second narrowing (19) when the sensor chip (3) no longer separates the supply lines (10, 12) from one another, **characterized in that** the valve body is formed as a float (22) which has a lower density than the liquid fuel.

2. Pressure sensor module according to Claim 1, **characterized in that** the first narrowing (18) is formed by a grating.

3. Pressure sensor module according to Claim 1, **characterized in that** the float (22) is a sphere which has a smaller cross section than the supply line (10, 12).

4. Pressure sensor module according to Claim 1 or 3, **characterized in that** the float (22) is formed by an element (33) with longitudinal grooves (35).

5. Pressure sensor module according to Claim 1, **characterized in that** the pressure sensor module (1) has a first supply line (10) and a second supply line (12), **in that** the first supply line (10) is connected to a suction pipe of an internal combustion engine, **in that** the second supply line (12) is connected to a fuel line, and **in that** the valve (15) is arranged in the first supply line (10).

6. Pressure sensor module according to Claim 1, **characterized in that** a longitudinal axis of the at least one part of the supply line (10, 12) in which the float (22) is arranged runs approximately vertically.

7. Pressure sensor module according to Claim 1 or 5, **characterized in that** two supply lines (10, 12) are provided, and **in that** a pressure prevails at least occasionally in one supply line (10, 12), which pressure is greater than or equal to the pressure in the other supply line (12, 10).

8. Pressure sensor module according to Claim 1 or 5, **characterized in that** the supply line (10, 12) has guide rails (17) at least in places between two narrowings (18, 19).

9. Pressure sensor module according to one or more of Claims 1, 2, 4 or 6, **characterized in that** the float (22) has at least one sealing element (16).

10. Pressure sensor module according to Claim 1, **characterized in that** at least one sealing element (16) is present in the region of the narrowing (18, 19) against which the float seals the supply line (10, 12).

10. Pressure sensor module according to Claim 2 or 6, **characterized in that** the supply line (10, 12) has guide rails (17) at least in places between two narrowings (18, 19).

11. Pressure sensor module according to one or more of Claims 2, 4, 5, 7 or 8, **characterized in that** the float (22) has at least one sealing element (16).

12. Pressure sensor module according to Claim 2, **characterized in that** at least one sealing element (16) is present in the region of the narrowing (18, 19) against which the float seals the supply line (10,12).

## Revendications

1. Module capteur de pression pour la mesure d'une pression différentielle, se composant au moins d'une puce de capteur (3) pour la mesure d'une pression différentielle, et d'un boîtier de module, qui présente au moins deux conduites d'arrivée (10, 12), qui sont séparées l'une de l'autre par la puce de capteur et dans lesquelles il existe au moins temporairement des pressions différentes, dans lequel une des deux conduites d'arrivée (10, 12) est adaptée pour conduire un carburant liquide, dans lequel une soupape (15) est disposée dans au moins une conduite d'arrivée (10, 12), laquelle ferme cette conduite d'arrivée (10, 12) lorsque la puce de capteur (3) ne sépare plus les conduites d'arrivée (10, 12) l'une de l'autre, dans lequel la soupape (15) est formée d'au moins deux étranglements (18, 19) d'une première conduite d'arrivée (10, 12) et d'un corps de soupape, qui est disposé dans cette conduite d'arrivée (10, 12) de façon mobile entre les deux étranglements (18, 19), qui s'applique sur un premier étranglement (18), qui ne ferme pas par sa section transversale la conduite d'arrivée (10), et qui ferme la conduite d'arrivée (10) du fait qu'il s'applique sur le deuxième étranglement (19), lorsque la puce de capteur (3) ne sépare plus les conduites d'arrivée (10, 12) l'une de l'autre, **caractérisé en ce que** le corps de soupape est constitué par un corps remontant (22), qui présente une densité plus faible que le carburant liquide.

2. Module capteur de pression selon la revendication 1, **caractérisé en ce que** le premier étranglement (18) est formé par une grille perforée.

3. Module capteur de pression selon la revendication 1, **caractérisé en ce que** le corps remontant (22) est une bille, qui a une plus petite section transversale que la conduite d'arrivée (10, 12).

4. Module capteur de pression selon la revendication 1 ou 3, **caractérisé en ce que** le corps remontant (22) est formé par un élément (33) avec des rainures longitudinales (35).

5. Module capteur de pression selon la revendication 1, **caractérisé en ce que** le module capteur de pression (1) comporte une première conduite d'arrivée (10) et une deuxième conduite d'arrivée (12), **en ce que** la première conduite d'arrivée (10) est raccordée à une tubulure d'admission d'un moteur à combustion interne, **en ce que** la deuxième conduite d'arrivée (12) est raccordée à une conduite de carburant, et **en ce que** la soupape (15) est disposée dans la première conduite d'arrivée (10).

6. Module capteur de pression selon la revendication 1, **caractérisé en ce qu'**un axe longitudinal de ladite au moins une partie de la conduite d'arrivée (10, 12), dans laquelle le corps remontant (22) est disposé, est sensiblement vertical.

7. Module capteur de pression selon la revendication 1 ou 5, **caractérisé en ce qu'**il est prévu deux conduites d'arrivée (10, 12), et **en ce qu'**il règne au moins temporairement dans une conduite d'arrivée (10, 12) une pression, qui est supérieure ou égale à la pression dans l'autre conduite d'arrivée (12, 10).

8. Module capteur de pression selon la revendication 1 ou 5, **caractérisé en ce que** la conduite d'arrivée (10, 12) présente des rails de guidage au moins partiels (17) entre deux étranglements (18, 19).

9. Module capteur de pression selon une ou plusieurs des revendications 1, 2, 4 ou 6, **caractérisé en ce que** le corps remontant (22) présente au moins un élément d'étanchéité (16).

10. Module capteur de pression selon la revendication 1, **caractérisé en ce qu'**il se trouve au moins un élément d'étanchéité (16) dans la région de l'étranglement (18, 19), sur lequel le corps remontant ferme de façon étanche la conduite d'arrivée (10, 12).

10. Module capteur de pression selon la revendication 2 ou 6, **caractérisé en ce que** la conduite d'arrivée (10, 12) présente des rails de guidage au moins partiels (17) entre deux étranglements (18, 19).

11. Module capteur de pression selon une ou plusieurs des revendications 2, 4, 5, 7, ou 8, **caractérisé en ce que** le corps remontant (22) présente au moins un élément d'étanchéité (16).

12. Module capteur de pression selon la revendication 2, **caractérisé en ce qu'**il se trouve au moins un élément d'étanchéité (16) dans la région de l'étranglement (18, 19), sur lequel le corps remontant ferme de façon étanche la conduite d'arrivée (10, 12).
